# EUROPÄISCHE PATENTANMELDUNG

(11) **EP 0 969 345 A1**
(43) Veröffentlichungstag der Anmeldung: **05.01.2000**
(21) Anmeldenummer: 99113049.3
(22) Anmeldetag: 29.06.1999
(51) Int. Cl.: G06F 1/00

(54) **Rechnergerät mit Berechtigungsschutz**

(30) Priorität: 29.06.1998 DE 19828930
(71) Anmelder: PCS PC-Systeme Entwicklungs- und Produktionsgesellschaft mbH & Co. KG, 86199 Augsburg (DE)
(72) Erfinder: Fischer, Raimund, 86316 Friedberg (DE)
(74) Vertreter: Epping, Wilhelm, Dr.-Ing.

(57) **Zusammenfassung**

Zum Bewerkstelligen eines Schutzes vor Diebstahl, Fremdnutzung oder Raubkopieren von Software wird ein Rechnergerät mit Berechtigungsschutz vorgeschlagen, in dessen FLASH-BIOS beim allerersten Hochlaufen wenigstens eine einzige Schutzinformation geschrieben worden ist, die Grundlage einer Berechtigungsprüfung bei Benutzungen des Rechnergeräts ist.

## Beschreibung

Die Erfindung betrifft ein Rechnergerät mit Berechtigungsschutz gemäß dem Oberbegriff des Anspruchs 1.

Für Rechnergeräte besteht ein Schutzbedürfnis, einerseits, weil sie als physische Komponente wertvoll sind, andererseits aber auch, weil Programme und Daten gespeichert sind, die nur berechtigten Personen zur Verfügung stehen sollen. Weiter besteht ein Bedürfnis, Software, die auf einen 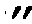 Namen" im BIOS des Rechnergeräts zurückgreifen, gegen Raubkopieren zu schützen.

Zum Schutz von Rechnergeräten können Hardwareschlüssel, sogenannte Dongle's vorgesehen sein, die in die Druckerschnittstelle eingesteckt werden und die die Zugangsberechtigung zum Gerät liefern. Anstelle des oder zusätzlich zum Hardwareschlüssel kann die Benutzung einer Chipkarte vorgesehen sein, um die Zugriffsberechtigung erteilt zu bekommen.

Nachteilig ist, dass der Hardwareschlüssel bzw. die Chipkarte nicht verloren gehen dürfen.

Aus der Druckschrift US-A-5 265 163 ist ein Rechnergerät mit Berechtigungsschutz bekannt, bei dem beim allerersten Hochlaufen des Rechnergeräts wenigstens eine einzige Schutzinformation in den nicht-flüchtigen BIOS-Speicher des Rechnergeräts geschrieben wird. Die Schutzinformation ist durch wenigstens ein Kennwort gebildet. Es bleibt für alle Benutzer des Rechnergeräts stets geheim. Hat eine Person Kenntnis von dem oder den Kennwörtern, ist das Rechnergerät vor Fremdnutzung und Diebstahl gespeicherter Informationen und Software nicht mehr geschützt.

Aufgabe der vorliegenden Erfindung ist es daher, ein Rechnergerät anzugeben, das einen Schutz gegenüber Diebstahl und Fremdnutzung und damit auch einen Schutz gegenüber Raubkopieren von Software auch noch nach Bekanntsein von möglicherweise benötigten Kennwörtern hat.

Diese Aufgabe wird ausgehend von einem Rechnergerät der eingangs genannten Art erfindungsgemäß durch ein Rechnergerät gelöst, das die im Anspruch 1 angegebenen Merkmale aufweist.

Ein solches Rechnergerät hat den Vorteil, dass es ohne die Verwendung von Hardwareschlüssel bzw. Chipkarte und unabhängig von Kennwörtern einen Schutz vor Diebstahl und Fremdnutzung aufweist. Durch den Schutz gegenüber Diebstahl und Fremdnutzung ist auch ein Schutz gegen Raubkopieren von Software gegeben.

Erreicht wird dies dadurch, dass ein oder mehrere Schutzinformationen, z.B. persönliche Daten wie Name und/oder Adresse des zum Rechnergerät gehörenden Besitzers, ins FLASH-BIOS des Rechnergeräts beim allerersten Hochlaufen des Rechnergeräts geschrieben werden. Bei einer Nutzung des Rechnergeräts wird dann die Berechtigung dadurch sichergestellt, dass beim Hochlaufen des Rechnergeräts eine großflächige Anzeige der persönlichen Daten bzw. der Information, wer Berechtigter ist, erfolgt.

Da die Schutzinformationen eines berechtigten Nutzers vergleichbar einer Fahrgestellnummer quasi 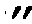 eingebrannt" sind, wird ein fest mit dem Rechnergerät verbundener Diebstahl- und Fremdnutzungsschutz sowie ein Schutz gegen Raubkopieren von Software erhalten. Hierfür ist dann kein zusätzlicher Hardwareaufwand mehr erforderlich. Insbesondere sind keine Hardwareschlüssel oder Chipkarten erforderlich, die verlierbar sind.

Vorteilhafte Ausgestaltungen der Erfindung sind Gegenstand von Unteransprüchen.

Danach kann die Meldung solange angezeigt werden, bis der Benutzer ein Kennwort korrekt eingegeben hat oder bis eine Identifizierung des Nutzers erfolgt ist. Parallel dazu kann solange ein akustischer Alarm ausgegeben werden, bis die Authentifikation erfolgreich abgeschlossen wurde. Weiter kann optional der Alarm mit Verzögerung und steigender Penetranz ausgegeben werden. Es kann auch optional ein zeitlich begrenzter Alarm bei jedem Hochlaufen ausgegeben werden, um unbeteiligte Personen aufmerksam zu machen. Die Dauer des Alarms kann optional durch den Berechtigten vorgegeben werden. Optional kann auch eine 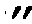 Mehrfinger-Griff"-Tastenkombination zum Abschalten des akustischen Alarms durch den Berechtigten eingegeben werden. Der Eintrag im BIOS kann verschlüsselt sein.

Durch all diese Maßnahmen wird ein visueller und akustischer Diebstahlschütz erhalten, der auch bei mobilen Geräten wirksam verwendet werden kann. Im Falle eines Serviceeinsatzes, weil z.B. eine Reparatur nötig ist oder weil eine Hard- und/oder Softwareaufrüstung erfolgen soll, kann die Rechtmäßigkeit des Besitzers geprüft werden.

## Patentansprüche

1. Rechnergerät mit Berechtigungsschutz, das neben einem Anzeigenteil einen FLASH-BIOS-Speicher für ein ein Hochlaufen des Rechnergeräts steuerndes FLASH-BIOS aufweist, **dadurch gekennzeichnet**, dass das FLASH-BIOS einen Abschnitt aufweist, in dem beim allerersten Hochlaufen des Rechnergeräts das Einlesen von persönlichkeitsspezifischen Informationen bezüglich eines Benutzers des Rechnergeräts und das Speichern dieser Informationen im FLASH-BIOS-Speicher als Schutzinformationen zur Realisierung des Berechtigungsschutzes gesteuert ist, und einen Abschnitt aufweist, in dem bei einem jeweiligen weiteren Hochlaufen des Rechnergeräts auf dem Anzeigenteil eine großflächige Anzeige der im FLASH-BIOS-Speicher gespeicherten Schutzinformationen zumindest während des Hochlaufens des Rechnergeräts gesteuert ist.

2. Rechnergerät nach Anspruch 1, **dadurch gekennzeichnet**, dass eine so lange Anzeige der Schutzinformationen beim Hochlaufen des Rechnergeräts gesteuert ist, bis eine korrekte Eingabe eines Kennwortes und/oder einer sonstigen Identifizierung eines Benutzers erkannt worden ist.

3. Rechnergerät nach Anspruch 1 oder 2, **dadurch gekennzeichnet**, dass parallel zur Anzeige der Schutzinformationen ein akustischer Alarm aktiviert ist.

4. Rechnergerät nach Anspruch 3, **dadurch gekennzeichnet,** dass der akustische Alarm bis zum Abschluss einer Authentifikation des Benutzers des Rechnergeräts aktiviert ist.

5. Rechnergerät nach Anspruch 3 oder 4, **dadurch gekennzeichnet**, dass der Einsatzzeitpunkt des akustischen Alarms gegenüber einem Anzeigezeitpunkt der Schutzinformationen zeitlich verzögerter und/oder die Penetranz des akustischen Alarms über die Zeit gesteigert ist.

6. Rechnergerät nach einem der Ansprüche 3 bis 5, **dadurch gekennzeichnet**, dass der akustische Alarm zeitbegrenzt ist.

7. Rechnergerät nach Anspruch 6, **dadurch gekennzeichnet**, dass die Begrenzung der Zeit des akustischen Alarms einstellbar ist.

8. Rechnergerät nach einem der Ansprüche 3 bis 7, **dadurch gekennzeichnet**, dass eine Authentifikation und/oder Abschaltung des akustischen Alarms durch eine Eingabe einer 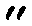 Mehrfinger-Griff"-Tastenkombination durchführbar ist.

9. Rechnergerät nach einem der vorstehenden Ansprüche, **dadurch gekennzeichnet**, dass die Schutzinformation im FLASH-BIOS-Speicher verschlüsselt ist.

10. Rechnergerät nach einem der vorstehenden Ansprüche, **dadurch gekennzeichnet**, dass die Schutzinformationen durch einen persönlichen Namen und/oder eine persönliche Adresse gebildet sind.
